# Europäisches Patentamt

# European Patent Office

# Office européen des brevets

(19)

(11) Publication number: **0 101 455**
**B1**

(12)

# EUROPEAN PATENT SPECIFICATION

(45) Date of publication of the patent specification:
**16.10.85**

(51) Int. Cl.⁴: **B 01 F 5/00, B 67 D 5/56**

(21) Application number: **83900579.0**

(22) Date of filing: **09.02.83**

(86) International application number:
**PCT/NO 83/00004**

(87) International publication number:
**WO 83/02734 (18.08.83 Gazette 83/19)**

(54) **A DEVICE FOR PROPORTIONING LIQUIDS.**

(30) Priority: **15.02.82 NO 820446**

(43) Date of publication of application:
**29.02.84 Bulletin 84/9**

(45) Publication of the grant of the patent:
**16.10.85 Bulletin 85/42**

(84) Designated Contracting States:
**CH DE FR GB LI NL SE**

(56) References cited:
**None**

(73) Proprietor: **RUMEN CHEMIE AG GLARUS, Postgasse 21, CH-Glarus (CH)**

(72) Inventor: **CAMPBELL-KELLY, Adrian Robert, Skrenten 3 B, N-6400 Molde (NO)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

## Description

This invention relates to a device for proportioning of a first and a second liquid. The device includes a mixing chamber connected with tubes to the two liquids which are to be mixed and to a reservoir for the resulting mixture of liquids. One of the objects of this invention is a proportioner for liquids which is cheap to install and easy to maintain.

In particular this invention is used for diluting a concentrate with water, although of course the invention is not limited to this specific application.

The characterising features of the proportioning device according to the invention are that the bottom of the mixing chamber is connected to a reservoir (10) of the first liquid (1) through a first connecting tube (2), that the second liquid (19) is directed to the mixing chamber through a regulatory valve (20) and two branches of a three-way valve (9) and through a second connecting tube (8) which exits at a point between the top and bottom of the mixing chamber, that a third connecting tube (7) extends from the top of the mixing chamber or a location between the top of the chamber and the outlet of second connecting tube (8) in the chamber (6) to the top of said reservoir (10') for the resulting liquid mixture, and a drain tube (22) (siphon tube) is connected to the free branch of the three-way valve (9), the reservoir (10) for the first liquid being placed at a lower level than the reservoir (10') for the resulting liquid mixture (1'), the open end of the drain tube (22) being at a lower level than the end of the second connecting tube (8) within the mixing chamber, and the regulatory valve (20) being activated by the amount of liquid in the upper reservoir (10').

Further features of the invention will appear from the subsequent patent claims as well as from the description below with reference to the attached figures.

Fig. 1-8 show different stages in the liquid proportioning sequence.

Fig. 9 is a cross-section through the three-way valve, and fig. 10, 11 and 12 are cross-sections X, XI and XII respectively in fig. 9.

Fig. 13 shows an alternative installation where the regulatory valve is activated by electronic sensors instead of by mechanical means.

Fig. 14 illustrates a modification of the mixing chamber enabling adjustment to provide different dilutions of the two liquid components.

Liquid concentrate 1 is gravity-fed from a first reservoir 10 via a first connecting tube 2 to the mixing chamber 6. The mixing chamber has a level mark 6' which, in the chosen though not limiting example, indicates 100 ml., and the level of concentrate will lie approximately on the level mark 6' depending on the level in the concentrate reservoir 10.

In the chosen though not limiting example the other liquid is water 19 which is supplied to the mixing chamber 6 through a regulatory valve 20, e.g. a solenoid valve, a water supply tube 21, two branches of a three-way valve 9 and a second connecting tube 8. Thus when water is directed into the mixing chamber 6, the predetermined volume of concentrate in the mixing chamber 6 will be carried up to a second reservoir 10' for the liquid mixture 1' by the water in a more or less diluted condition, via the third connecting tube (7).

From the figures it can be seen that the reservoir 10' for the diluted liquid is fastened by a swivel 13 to one end of a balance arm 14 which in turn is suspended from a hook 15. The other end of the balance arm 14 activates through a connecting link (16, 17, 18) the regulatory valve (20). Particularly, the connecting link comprises a length of wire 16 which through a switch arm 18 controls an electric limit switch 17, which in turn activates the regulatory valve 20. When the level of diluted liquid in reservoir 10' reaches a specific upper level, being between a lower and an upper limit value, the switch arm 18 will move to open the switch 17 and close the regulatory valve 20. The time required to fill the upper reservoir 10' for the diluted liquid is dependent on the volume of the reservoir 10' and of the water pressure, typically 25-40 seconds for about 3 litres of diluted liquid. The time required for the concentrate to flow from the concentrate reservoir 1 to the mixing chamber 6 is 1-2 min depending on the level in the concentrate reservoir 1 and the viscosity of the concentrate. The amount of water in the diluted liquid is therefore determined by the weight of the diluted liquid in the top reservoir 10'. The amount of concentrate added is determined, as already mentioned, by the amount of concentrate which automatically enters the mixing chamber. With the illustrated device a dosage accuracy of $\pm$ 10% or better is achieved by simple means. In the chosen example, the concentration of the diluted liquid is 3% (vol).

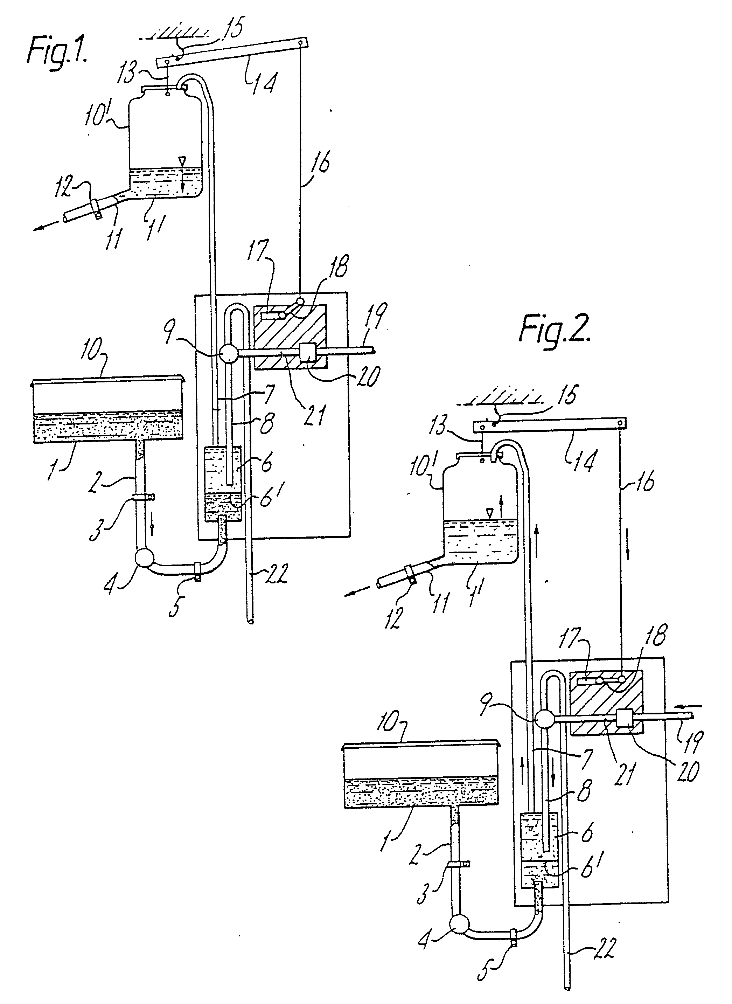

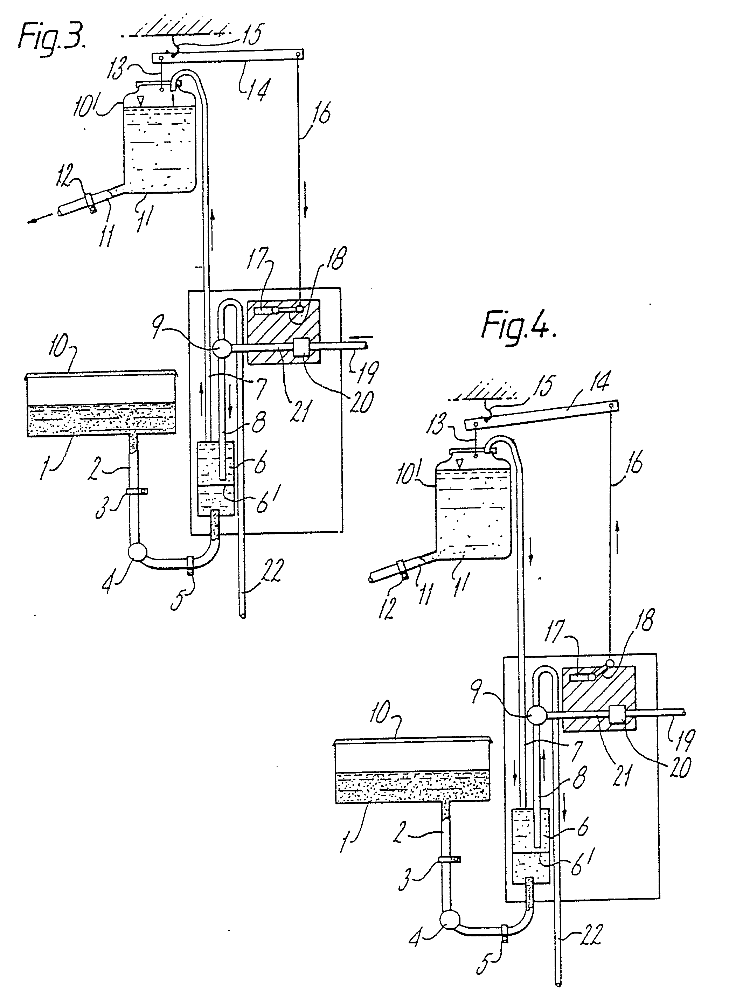

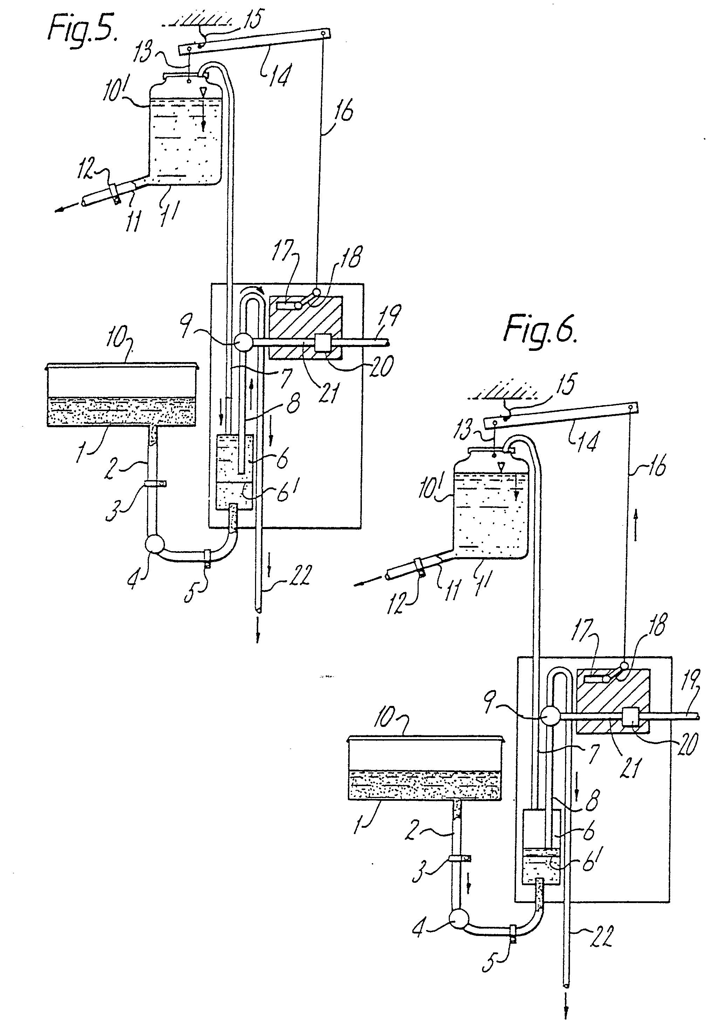

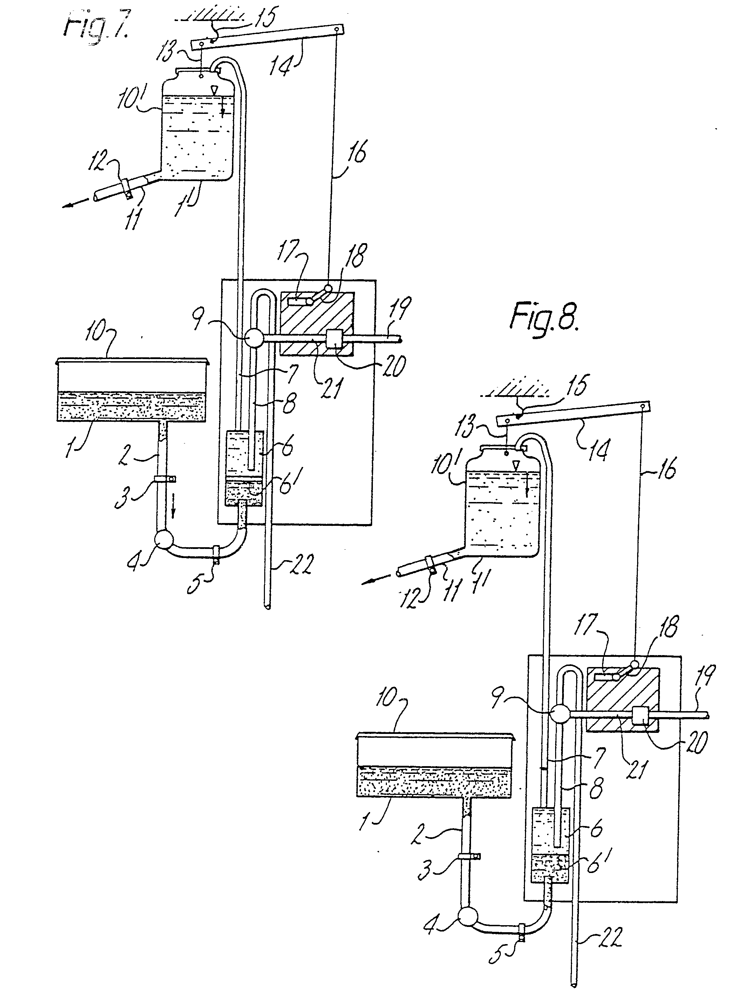

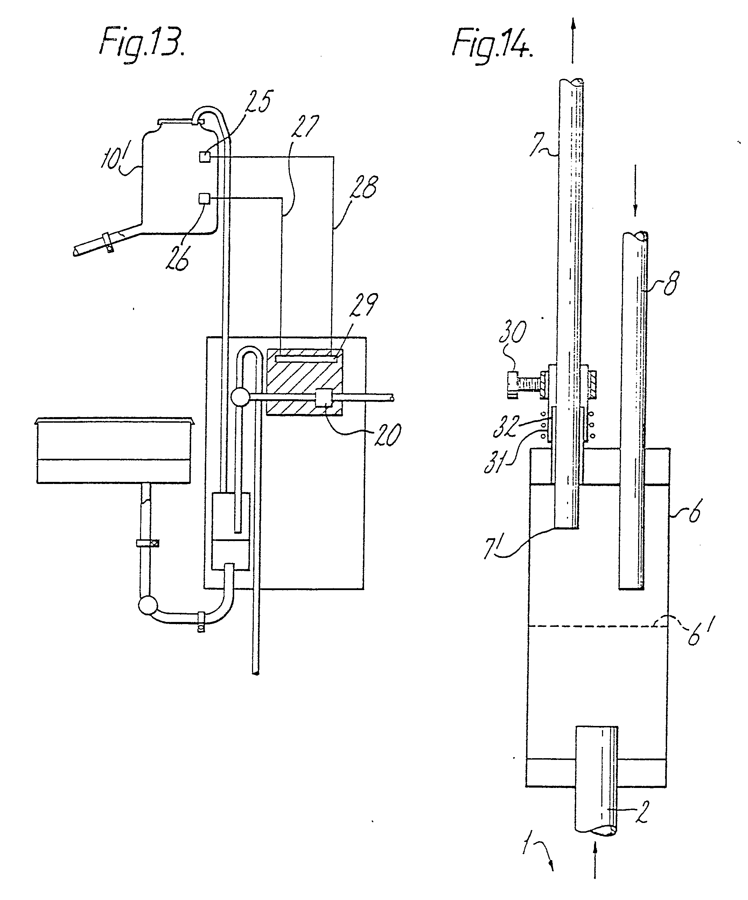

As indicated in fig. 13, the means 14-18 in fig. 1-8 may be conveniently replaced by electrical and/or electronic means. Thus, the reservoir 10' is stationary and may be provided with upper and lower level stationary sensors 25 and 26, respectively. These sensors may be of any conventional type such as float operated microswitches, inductive or capacitive elements or optical devices. The sensors 25 and 26 are connected via leads 27 and 28, respectively, to a detector and control unit 29, the output of which activates the regulatory valve 20 in a manner analogous to that of switch 17 in fig. 1-8.

Using the mixing chamber shown in fig. 14 it is possible to adjust the concentration of the diluted liquid within e.g. a range of 0-3% (vol.). To this effect, the tube 7 is selectively movable up and down in the mixing chamber 6 instead of being firmly fixed thereto. To obtain a fluid tight engagement between the chamber 6 and tube 7, tube 7 passes through a flexible sleeve 31 which at its lower end is attached to a short tube 32 protruding from the top of the mixing chamber, said tube 32 having a dimension greater than that of tube 7. At its upper end, sleeve 31 is surrounded by a screw-clamp 30 to position tube 7 relative to the mixing chamber. The position of the lower end 7' of tube 7 within chamber 6 determines the amount of concentrate in chamber 6.

The filling sequence for the concentrate is initiated by emptying the mixing chamber 6. This emptying occurs automatically each time the top reservoir 10' for the diluted liquid is filled, by means of the drain tube 22 which acts as a siphon through the already mentioned three-way valve 9. Thus the described proportioning device also uses the principle of siphoning to ensure that the concentrate is dosed correctly.

As shown in the fig. 1-8 there is a third connecting tube 7 connecting the top of the mixing chamber 6 and the top edge of the upper reservoir 10'. It is important that the upper reservoir 10' is placed at a significantly higher level than the concentrate reservoir 10. The mixing chamber 6 is preferably placed so that the top of the mixing chamber 6 is just below the level of the bottom of the concentrate reservoir 10. To ensure that water is not forced into the concentrate reservoir 10, a one-way valve 4 is inserted into the first connecting tube 2. In addition there are two tubing clamps 3 and 5 placed on tube 2, though they do not have any significance for the understanding of the invention. The same applies to the clamp 12 placed on the drain tube from the reservoir for diluted liquid 10'. When the system is first started, the system is preferably tested without concentrate in the mixing chamber 6, the clamp 5 thus being kept closed. This allows the upper reservoir 10' to be filled with water and checking of the regulatory valve 20 which should close when the reservoir 10' is full. The excess water which is in tube 7 will flow back to the mixing chamber 6 and ensure that it is partly emptied so that the water runs out through the second connecting tube 8 via the three-way valve 9 and down the siphon tube 22. The remaining water in the mixing chamber 6 will be at the same level as the bottom end of the tube 8, which as earlier mentioned extends a certain distance into the mixing chamber 6. When concentrate flows into the mixing chamber 6, the concentrate will fill the air space in the mixing chamber. The concentrate must flow relatively slowly from the reservoir 10 to the chamber 6 because otherwise it would follow the water directly down the siphon before the siphon is broken. Flow restriction can be achieved by making the tube 8 of appropriate dimension, preferably of wider dimension than that of tube 2.

The operational sequence is best explained by referring to the attached fig. 1-8 together with the following table, where e.g. t0 is the starting time 0 sec., t1=20 sec., t2=40 sec., t3=41 sec., t4=42 sec., t5=45 sec., t6=100 sec., t7=160 sec. These sequence times are given as non-limitative examples only.

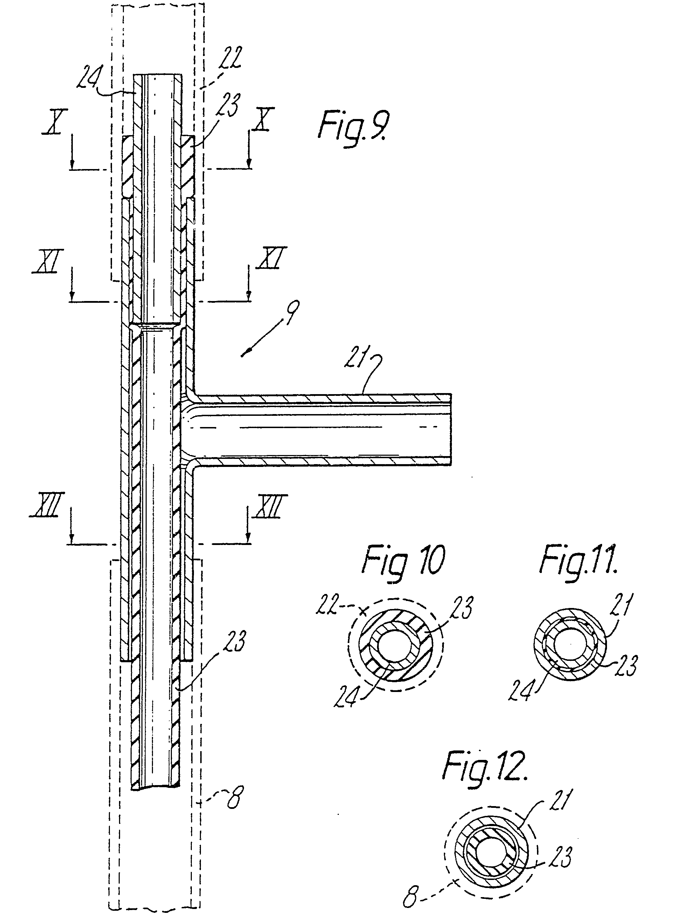

As earlier mentioned there is a three-way valve 9 used in connection with the present invention (see fig. 9). It may consist of a conventional T-tube 21, where an inner tube 23 is passed through the top of the "T". This inner tube, typically of silicon rubber, is fastened to the T-piece at the mouth of a branch thereof by means of a small piece of locking tube 24 which is pressed into the tube 23. Thus water flowing from tube 21 is prevented from flowing out of tube 22.

*(Table on the following page)*

## Claims

1. A proportioning device for mixing of a first and a second liquid, comprising a mixing chamber (6) with connecting tubes (2, 8) to the two liquids which are to be mixed and (7) to a reservoir (10') for the resulting liquid mixture (1'), characterized in that the bottom of the mixing chamber (6) is connected to a reservoir (10) of the first liquid (1) through a first connecting tube (2), that the second liquid (19) is directed to the mixing chamber through a regulatory valve (20) and two branches of a three-way valve (9) and through a second connecting tube (8) which exits at a point between the top and bottom of the mixing chamber, that a third connecting tube (7) extends from the top of the mixing chamber or a location between the top of the chamber and the outlet of second connecting tube (8) in the chamber (6) to the top of said reservoir (10') for the resulting liquid mixture, and a drain tube (22) (siphon tube) is connected to the free branch of the three-way valve (9), the reservoir (10) for the first liquid being placed at a lower level than the reservoir (10') for the resulting liquid mixture (1'), the open end of the drain tube (22) being at a lower level than the end of the second connecting tube (8) within the mixing chamber, and the regulatory valve (20) being activated by the amount of liquid in the upper reservoir (10').

2. A device as claimed in claim 1, characterized in that the reservoir (10') for diluted liquid (1') is suspended at one end of a balance arm (14), while the other end of the balance arm through a connecting link (16, 17, 18) activates a regulatory valve (20).

3. A device as claimed in claim 1, characterized in that the reservoir (10') for diluted liquid (1') is stationary and that the level of liquid in the reservoir at the highest and lowest levels is detected by two stationary sensors (25, 26) which in turn activate the regulatory valve (20) through a detection and control unit (29).

4. A device as claimed in claim 2, characterized in that the connecting link comprises a length of wire (16) which through a switch arm (18) controls an electric unit switch (17) which in turn activates the regulatory valve (20), e.g. a solenoid valve.

5. A device as claimed in claim 1, characterized in that the three-way valve (9) is T-shaped, its two coaxial branches being vertical, the upper one of which being connected to the drain tube (22) and the lower one of which being connected to said second connecting tube (8).

*Table*

| Status Fig. Time(t) | Switch 17 | Regulatory valve 20 | 3-way valve 9 | | One-way valve 4 | Mixing chamber 6 | Connecting tube 7 | Drain tube (siphon) 22 | Level in reservoir for diluted liquid 10' |
|---|---|---|---|---|---|---|---|---|---|
| | | | from/to 8-22 | from/to 21-8 | | | | | |
| Fig. 1 t0=0 sec | Open | Closed | Open | Closed | Open | Water in chamber and in tubes 7 and 8 up to level in reservoir 10. Concentrate up to level 6' | Water up to level in reservoir 10 | Empty | Falling |
| Fig. 2 t1=20 sec | Closed | Open | Closed | Open | Closed | Water runs into chamber, dilutes concentrate and moves mixture up to reservoir 10' | Concentrate and water rising to reservoir 10' | Empty | Rising |
| Fig. 3 t2=40 sec | Closed | Open | Closed | Open | Closed | Water running in through tube 8 and out of tube 7 | Water rising | Empty | Rising |
| Fig. 4 t3=41 sec | Open | Closed | Open | Closed | Closed | Water running in through tube 7 and out of tube 8 | Water falling | Water begins to run out | Stable |
| Fig. 5 t4=42 sec | Open | Closed | Open | Closed | Closed | Water running in through tube 7 and out of tube 8 | Water level has fallen to level in reservoir 10 | Water running out | Stable |
| Fig. 6 t5=45 sec | Open | Closed | Open | Closed | Open | Water level at bottom of tube 8. Concentrate is running into chamber | Empty | Almost empty | Stable or falling |
| Fig. 7 t6=100 sec | Open | Closed | Open | Closed | Open | Level of concentrate is rising. Water in chamber is pushed upwards | Empty | Empty | Stable or falling |
| Fig. 8 t7=160 sec | Closed | Open | Open | Closed | Closed | Concentrate is at correct level 6'. Water above this level and up to the top of the chamber | Water up to level in reservoir 10 | Empty | Stable or falling |

6. A device as claimed in claim 1, characterized in that the top of the mixing chamber (6) is at a level being approximately the same as that of the bottom of the first liquid reservoir (10).

7. A device as claimed in claim 5, characterized in that the three-way valve consists of a conventional T-tube (21), when an inner tube (23), e.g. of silicon rubber, is passed through the two coaxial branches of the "T", said tube (23) being clamped to the opening of one of said branches by means of a small piece of locking tube (24) which is pressed into said tube (23).

## Patentansprüche

1. Vorrichtung zum Dosieren zum Mischen einer ersten und einer zweiten Flüssigkeit mit einer Mischkammer (6) mit Verbindungsleitungen (2, 8) zu den beiden zu mischenden Flüssigkeiten und (7) zu einem Behälter (10') für die sich ergebende Flüssigkeitsmischung (1'), dadurch gekennzeichnet, dass der Boden der Mischkammer (6) mit einem Behälter (10) für die erste Flüssigkeit (1) über eine erste Verbindungsleitung (2) verbunden ist, dass die zweite Flüssigkeit (19) über ein Regelventil (20) und zwei Verzweigungen eines Drei-Wege-Ventils (9) und durch eine zweite Verbindungsleitung (8), welche in einem Bereich zwischen dem Boden und dem Deckel der Mischkammer mündet, in die Mischkammer geleitet wird, dass eine dritte Verbindungsleitung (7) sich von dem Deckel der Mischkammer oder einer Stelle zwischen dem Deckel der Kammer und dem Auslass der zweiten Verbindungsleitung (8) in die Kammer (6) zu dem Deckel des Behälters (10') für die sich bildende Flüssigkeitsmischung erstreckt, und dass eine Ablassleitung (22) (Dükerrohr) mit der freien Verzweigung des Drei-Wege-Ventils (9) verbunden ist, wobei der Behälter (10) für die erste Flüssigkeit an einem niedrigeren Niveau als der Behälter (10') für die sich ergebende Flüssigkeitsmischung (1') angeordnet ist, und wobei das offene Ende der Ablassleitung (22) sich an einem niedrigeren Niveau befindet als das Ende der zweiten Verbindungsleitung (8) in der Mischkammer, und wobei das Regelventil (20) durch die Menge an Flüssigkeit in dem oberen Behälter (10') aktiviert wird.

2. Vorrichtung nach Anspruch 1, dadurch gekennzeichnet, dass der Behälter (10') für die verdünnte Flüssigkeit (1') an einem Ende eines Waagebalkens (14) aufgehängt ist, dessen anderes Ende mittels einer Verbindungsvorrichtung (16, 17, 18) das Regelventil (20) betätigt.

3. Vorrichtung nach Anspruch 1, dadurch gekennzeichnet, dass der Behälter (10') für die verdünnte Flüssigkeit (1') stationär angeordnet ist und dass der Flüssigkeitsspiegel in dem Behälter mittels zweier stationärer Sensoren (25, 26) am höchsten und am niedrigsten Niveau ermittelt wird, welche über eine Anzeige- und Steuereinrichtung (29) das Regelventil (20) betätigen.

4. Vorrichtung nach Anspruch 2, dadurch gekennzeichnet, dass die Verbindungsvorrichtung einen Draht (16) bestimmter Länge aufweist, welcher über einen Schaltarm (18) einen elektrischen Schalter (17) betätigt, welcher wiederum das Regelventil (20), z.B. ein Magnetventil, betätigt.

5. Vorrichtung nach Anspruch 1, dadurch gekennzeichnet, dass das Drei-Wege-Ventil (9) T-förmig ausgestaltet ist, wobei seine beiden koaxialen Verzweigungen vertikal angeordnet sind, wobei die untere Verzweigung mit der Ablassleitung (22) verbunden ist und die obere Verzweigung mit der zweiten Verbindungsleitung (8) verbunden ist.

6. Vorrichtung nach Anspruch 1, dadurch gekennzeichnet, dass der Deckel der Mischkammer (6) sich in einem Niveau befindet, welches annäherungsweise dasselbe ist, wie das des Bodens des Behälters (10) für die erste Flüssigkeit.

7. Vorrichtung nach Anspruch 5, dadurch gekennzeichnet, dass das Drei-Wege-Ventil aus einer konventionellen T-förmigen Röhre (21) besteht, wobei eine innere Röhre (23), welche z.B. aus Silikonkautschuk besteht, durch die beiden koaxialen Verzweigungen des „T" geführt ist, wobei die Röhre (23) in die Öffnung einer der beiden Verzweigungen mittels eines kleinen Teils einer Verriegelungsröhre (24), welche in die Röhre (23) eingepresst ist, geklemmt ist.

## Revendications

1. Dispositif de dosage destiné à mélanger un premier et un second liquide, comprenant une chambre de mélange (6) avec des tubes de liaison (2, 8) menant aux deux liquides à mélanger et un tube (7) menant à un réservoir (10') servant au mélange des liquides résultant (1'), caractérisé en ce que le fond de la chambre de mélange (6) est relié à un réservoir (10) contenant le premier liquide (1) par l'intermédiaire d'un premier tube de liaison (2), en ce que le second liquide (19) est dirigé vers la chambre de mélange par l'intermédiaire d'une vanne de régulation (20) et de deux branches d'une vanne à trois voies (9) et par l'intermédiaire d'un second tube de liaison (8) qui sont en un point situé entre le sommet et le fond de la chambre de mélange, en ce qu'un troisième tube de liaison (7) s'étend depuis le sommet de la chambre de mélange, ou depuis un endroit situé entre le sommet de la chambre et la sortie du second tube de liaison (8) dans la chambre (6), jusqu'au sommet dudit réservoir (10') servant au mélange de liquides résultant, et en ce qu'un tube de vidange (22) (tube siphon) est relié à la branche libre de la vanne à trois voies (9), le réservoir (10) de premier liquide étant placé à un niveau plus bas que le réservoir (10') servant au mélange de liquides résultant (1'), l'extrémité ouverte du tube de vidange (22) étant à un niveau plus bas que l'extrémité du second tube de liaison (8) à l'intérieur de la chambre de mélange, et la vanne de régulation (20) étant actionnée par la quantité de liquide dans le réservoir supérieur (10').

2. Dispositif suivant la revendication 1, caractérisé en ce que le réservoir (10') pour le liquide dilué (1') est suspendu, à une extrémité d'un bras de balance (14), tandis que l'autre extrémité du bras de balance actionne, par l'intermédiaire d'une articulation de liaison (16, 17, 18), une vanne de régulation (20).

3. Dispositif suivant la revendication 1, caractérisé en ce que le réservoir (10') pour le liquide dilué (1') est fixe et en ce que le niveau de liquide dans le réservoir, au plus haut et au plus bas niveaux, est détecté par deux détecteurs fixes (25, 26) qui, à leur tour, actionnent la vanne de régulation (20) par l'intermédiaire d'une unité de détection et de commande (29).

4. Dispositif suivant la revendication 2, caractérisé en ce que l'articulation de liaison comprend une certaine longueur de fil (16) qui, par l'intermédiaire d'un bras d'interrupteur (18), commande un interrupteur électrique à fin de course (17) qui, à son tour, actionne la vanne de régulation (20), par exemple à solénoïde.

5. Dispositif suivant la revendication 1, caractérisé en ce que la vanne à trois voies (9) est en forme de T, ses deux branches coaxiales étant verticales, la plus haute d'entre elles étant reliée au tube de vidange (22) et la plus basse d'entre elles étant reliée audit second tube de liaison (8).

6. Dispositif suivant la revendication 1, caractérisé en ce que le sommet de la chambre de mélange (6) est à un niveau qui est approximativement le même que celui du fond du réservoir de premier liquide (10).

7. Dispositif suivant la revendication 5, caractérisé en ce que la vanne à trois voies se compose d'un tube en T classique (21), pour lequel un tube intérieur (23), par exemple en caoutchouc de silicone, est passé dans les deux branches coaxiales du «T», le tube (23) étant attaché à l'ouverture d'une desdites branches au moyen d'un petit morceau de tube de verrouillage (24) qui est comprimé dans ledit tube (23).

Fig.1.

Fig.2.

Fig.3.

Fig.4.

**Fig.5.**

**Fig.6.**

Fig.7.

Fig.8.

Fig.9.

Fig 10

Fig.11.

Fig.12.

## Fig.13.

## Fig.14.